# EUROPÄISCHE PATENTSCHRIFT

(11) **EP 1 586 206 B1**
(45) Veröffentlichungstag und Bekanntmachung des Hinweises auf die Patenterteilung: **21.06.2006**
(21) Anmeldenummer: 04702693.5
(22) Anmeldetag: 16.01.2004
(51) Int. Cl.: H04Q 7/22, H04B 7/26, H04L 12/56

(54) **VERFAHREN ZUR SYNCHRONISATION IN FUNKKOMMUNIKATIONSSYSTEMEN**
METHOD FOR PERFORMING SYNCHRONIZATION IN RADIO COMMUNICATIONS SYSTEMS
PROCEDE POUR SYNCHRONISATION DANS DES SYSTEMES DE RADIOCOMMUNICATION

(30) Priorität: 20.01.2003 DE 10302228
(43) Veröffentlichungstag der Anmeldung: 19.10.2005
(73) Patentinhaber: SIEMENS AKTIENGESELLSCHAFT, 80333 München (DE)
(72) Erfinder: DILLINGER, Markus, D-81737 München (DE); LUO, Jijun, D-81677 München (DE); MOHYELDIN, Eiman Bushra, D-81476 München (DE); MUKERIEE, Rahul, D-81737 München (DE)
(86) Internationale Anmeldenummer: PCT/EP2004/000318
(87) Internationale Veröffentlichungsnummer: WO 2004/066646

(56) Entgegenhaltungen:
- EP-A- 0 966 116
- EP-A- 1 248 387
- WO-A-94/30024
- US-A- 5 751 694
- US-A1- 2001 038 622

## Beschreibung

Die Erfindung betrifft ein Verfahren zum Betreiben von mindestens einem Funkkommunikationssystem nach dem Oberbegriff des Anspruchs 1. Weiterhin betrifft die Erfindung ein Verfahren zum Betreiben von mindestens einem Funkkommunikationssystem nach dem Oberbegriff des Anspruchs 11.

Ferner betrifft die Erfindung eine Netzeinrichtung zum Betreiben von mindestens einem Funkkommunikationssystem nach dem Oberbegriff des Anspruchs 17.

In Funkkommunikationssystemen werden Informationen (beispielsweise Sprache, Bildinformation, Videoinformation, SMS (Short Message Service) oder andere Daten) mit Hilfe von elektromagnetischen Wellen über eine Funkschnittstelle zwischen sendender und empfangender Station übertragen. Das Abstrahlen der elektromagnetischen Wellen erfolgt dabei mit Trägerfrequenzen, die in dem für das jeweilige System vorgesehenen Frequenzband liegen. Ein Funkkommunikationssystem umfasst hierbei teilnehmerseitige Funkstationen, z.B. Mobilstationen, Funkzugangseinrichtungen, wie z.B. Basisstationen oder Funkzugangspunkte, sowie gegebenenfalls weitere netzseitige Einrichtungen. Die Funkstationen und die Funkzugangseinrichtungen sind in einem Funkkommunikationssystem über eine Funkschnittstelle miteinander verbunden. Die Versendung von Daten von einer Funkstation zu einer Funkzugangseinrichtung erfolgt in Aufwärtsrichtung, diejenige von einer Funkzugangseinrichtung zu einer Funkstation in Abwärtsrichtung.

Funkkommunikationssysteme können sich z.B. durch ihre Funkzugangstechnologie oder Übertragungsverfahren, durch Netzwerksbetriebssysteme und Netzwerkprotokolle unterscheiden. Funknetze mit einem räumlich stark begrenzten Funkabdeckungsbereich nennt man WLANs (Wireless Local Area Networks). Beispiele für Funkkommunikationssysteme sind Systeme nach den Standards GSM (Global System for Mobile Communications), GPRS (General Packet Radio Service), EDGE (Enhanced Data Rates for GSM Evolution), TSM (Time Division Synchronous Code Division Multiple Access), DECT (Digital European Cordless Telephony), IS95 (Interim Standard No. 95), cdma2000, UMTS (Universales mobiles Telekommunikationssystem), IEEE 802.11 und Bluetooth, sowie Systeme der vierten Generation.

Der Zugriff von Funkstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Funkstationen aufgeteilt werden. Dabei findet häufig (zum Beispiel bei GSM, TETRA (Terrestrial Trunked Radio), DECT, UMTS) eine Unterteilung des Übertragungsmediums in Frequenz- und/oder Zeitkanäle entsprechend der Funkschnittstelle statt. Auch Kombinationen mehrerer dieser Verfahren werden angewendet. Um einen sparsamen Umgang mit den knappen Funkressourcen zu ermöglichen, befinden sich in Funkkommunikationssystemen Einrichtungen, wie z.B. Steuereinrichtungen, welche die Funkressourcen verwalten bzw. eine Ressourcenzuteilung vornehmen. Die Ressource einer Funkschnittstelle kann hierbei zum Beispiel ein Zeitschlitz-Frequenz-Paar oder auch nur eines von beiden (Zeitschlitz oder Frequenz) sein.

Eine Mehrzahl von Funkkommunikationssystemen mit ihren jeweiligen Funknetzen kann unter dem Begriff heterogenes Netzwerk zusammengefasst werden. Ein solches heterogenes Netzwerk kann Komponenten von verschiedenen Herstellern und Betreibern enthalten. Die in den einzelnen Funkkommunikationssystemen eines heterogenen Netzwerkes eingesetzten Technologien können sich unterscheiden. Eine Überlappung der Funkabdeckungsbereiche von zumindest manchen der einzelnen Funknetze ist in der Regel zumindest in einem örtlich begrenzten Bereich gegeben. Bezüglich der Kopplung der einzelnen Funkkommunikationssysteme untereinander existiert eine Reihe von Möglichkeiten. Bei einer schwachen Kopplung (loose coupling) z.B. sind die Funkkommunikationssystemen in der Regel nicht miteinander über eine Einrichtung zur Funkzugangskontrolle verbunden. Bei einer starken Kopplung (tight coupling) hingegen existiert eine gemeinsame Netzeinrichtung für mehrere Funkkommunikationssysteme, welche den Funkzugang zu diesen regelt.

Eine zur Kommunikation mit einem heterogenen Netzwerk geeignete Funkstation weist in dem Fall, dass in den einzelnen Funkkommunikationssystemen unterschiedliche Funkzugangstechnologien verwendet werden, Einrichtungen auf, welche es der Funkstation ermöglichen, mit verschiedenartigen Funknetzen zu kommunizieren. Eine derartige Multi-Mode Fähigkeit ist z.B. in
3G TR 21.910 v3.0.0 (2000-07), Multimode UE Issues Categories, Principles and Procedures (Release 1999) beschrieben.

Das Dokument WO 94/30024 beschreibt ein Soft-Handover-Verfahren für ein CDMA-System. Die gleiche Nachricht wird über mehrere Basisstationen an eine Mobilstation gesendet. Zur Synchronisierung bestimmt die Mobilstation den Zeitunterschied zwischen den Signalen der verschiedenen Basisstationen.

Das Dokument "Y. Wang, S. Panwar, S. Lin, S. Mao: Wireless Video Transport Using Path Diversity: Multiple Description Vs. Layered Coding, XP010607250, IEEE 2002" beschreibt die Versendung von Videodaten in einem Funkkommunikationssystem.

Die Videodaten werden in mehrere Ströme aufgeteilt und über mehrere Pfade übertragen.

Der Erfindung liegt die Aufgabe zugrunde, Verfahren der eingangs genannten Art zum effizienten Betreiben eines oder mehrerer Funkkommunikationssysteme aufzuzeigen. Weiterhin soll eine Netzeinrichtung der eingangs genannten Art zur Steuerung eines oder mehrerer Funkkommunikationssysteme aufgezeigt werden.

Diese Aufgabe wird in Bezug auf das eingangs erstgenannte Verfahren durch ein Verfahren mit den Merkmalen des Anspruchs 1 gelöst.

Vorteilhafte Weiterbildungen und Ausgestaltungen dieses Verfahrens sind Gegenstand von Unteransprüchen.

Das erfindungsgemäße Verfahren kann zum Betreiben
i. von einem Funkkommunikationssystem mit mindestens zwei Einheiten einer Funkressource oder
ii. von mindestens zwei Funkkommunikationssystemen eingesetzt werden. Zu der mindestens einen Funkstation, welche sich in dem mindestens einen Überlappungsbereich der mindestens zwei Funkzugangseinrichtungen befindet, wird jeweils mindestens ein Signal von den mindestens zwei Funkzugangseinrichtungen gesendet. Erfindungsgemäß bestimmt die mindestens eine Funkstation aufgrund der Empfangszeitpunkte der mindestens zwei Signale mindestens einen Parameter für eine Synchronisation der Kommunikation

i. in den mindestens zwei Einheiten der Funkressource des einen Funkkommunikationssystems, oder
ii. in den mindestens zwei Funkkommunikationssystemen.
Bei der zu synchronisierenden Kommunikation handelt es sich um die Versendung von aufgespalteten Informationen, bei welcher über eine der mindestens zwei Funkzugangseinrichtungen ein erster Teil der Informationen und über eine andere der mindestens zwei Funkzugangseinrichtungen ein zweiter von dem ersten Teil unterschiedlicher Teil der Informationen zu der mindestens einen Funkstation gesendet wird.

Im Fall i stehen dem einen Funkkommunikationssystem mindestens zwei Einheiten einer Funkressourcen zur Verfügung, wobei es sich bei einer Einheit einer Funkressourcen z.B. um ein Frequenzband oder einen Code handeln kann. Neben den oben erwähnten mindestens zwei Einheiten einer Funkressource, deren Kommunikation erfindungsgemäß synchronisiert wird, können weitere Einheiten der gleichen oder einer anderen Funkressource in dem Funkkommunikationssystem eingesetzt werden.

Vorteilhaft ist es, wenn im Fall i das oder die Signale von den mindestens zwei Funkzugangseinrichtungen unter Verwendung einer jeweils unterschiedlichen Einheit der mindestens zwei Einheiten der Funkressource des Funkkommunikationssystems gesendet wird. So kann sich zur Versendung des mindestens einen Signals eine erste Funkzugangseinrichtung einer ersten Einheit der mindestens zwei Einheiten der Funkressource, eine zweite Funkzugangseinrichtung einer zweiten Einheit der mindestens zwei Einheiten der Funkressource, usw. bedienen. Es ist jedoch auch möglich, dass sich die zur Versendung der Signale, deren Empfangszeitpunkte von der Funkstation bestimmt werden, verwendeten Funkressourcen von denjenigen Funkressourcen unterscheiden, welche erfindungsgemäß synchronisiert werden.

Im Fall ii kann es sich bei den Funknetzen um gleichartige oder auch um verschiedenartige Funknetze handeln. Wie oben bereits ausgeführt, können sich Funknetze z.B. durch ihre Funkzugangstechnologie oder Übertragungsverfahren, durch Netzwerksbetriebssysteme oder Netzwerkprotokolle unterscheiden. Sie bilden zusammen ein heterogenes Netzwerk. Das heterogene Netzwerk kann z.B. aus einem WLAN, einem UMTS und einem GMS Netz bestehen.

Die Funkstation erhält jeweils mindestens ein Signal von jeder der mindestens zwei Funkzugangseinrichtungen. Im Fall ii empfängt die Funkstation somit bei zwei Funkkommunikationssystemen mindestens zwei Signale und bei drei Funkkommunikationssystemen empfängt sie mindestens drei Signale. Bei den Signalen kann es sich z.B. um Nutz- oder Signalisierungsinformation handeln. Die Signale können untereinander gleich oder auch unterschiedlich sein.

Der mindestens eine von der Funkstation bestimmte Parameter dient der Synchronisation der Kommunikation
i. in den mindestens zwei Einheiten der Funkressource für den Fall des Betreibens von einem Funkkommunikationssystem und
ii. in den mindestens zwei Funkkommunikationssystemen für den Fall des Betreibens von mehreren Funkkommunikationssystemen.
   Diese Synchronisation findet im Fall i nicht innerhalb einer Funkressource, wie z.B. innerhalb eines Frequenzbandes, sondern zwischen mehreren Funkressourcen, wie z.B. zwischen mehreren Frequenzbändern, statt. Im Fall ii findet die Synchronisation nicht innerhalb eines Funkkommunikationssystems, sondern zwischen mehreren Funkkommunikationssystemen statt.

Zur Bestimmung des mindestens einen Parameters können verschiedenste Rechenvorschriften verwendet werden, welche die Empfangszeitpunkte miteinander verknüpfen. Im einfachsten Fall können die Parameter auch aus einem oder mehreren Empfangszeitpunkten bestehen.

Vorteilhafterweise besteht der mindestens eine Parameter aus einer Differenz von Empfangszeitpunkten. Hiermit wird der zeitliche Abstand zwischen zwei oder mehreren Ereignissen, welche jeweils aus dem Empfang eines Signals bestehen, bestimmt.

In einer Ausgestaltung der Erfindung übermittelt die mindestens eine Funkstation den mindestens einen Parameter an mindestens eine der mindestens zwei Funkzugangseinrichtungen. Der mindestens eine Parameter wird also, nachdem er bestimmt wurde, im Falle von genau zwei Funkkömmunikationssystemen an eines der beiden oder beide Funkkommunikationssysteme gesendet. Grundsätzlich ist das Verfahren jedoch nicht auf zwei Funkkommunikationssysteme beschränkt.

Gemäß einer weiteren Ausgestaltung der Erfindung übermittelt die mindestens eine Funkstation an mindestens eine der mindestens zwei Funkzugangseinrichtungen Information über eine Speicherkapazität der mindestens einen Funkstation. Diese Übermittlung kann z.B. zusammen mit der Übermittlung des mindestens einen Parameters erfolgen. Sie kann jedoch auch an eine andere Funkzugangseinrichtung oder an ein anderes Funkkommunikationssystem gesendet werden, an welches der mindestens eine Parameter nicht übermittelt wurde. Die übermittelte Speicherkapazität kann sich auf die Gesamtspeicherkapazität der Funkstation beziehen oder auch auf eine feinere Untergliederung der Gesamtkapazität in Form von einer oder mehrerer Speicherkapazitäten für z.B. Informationen, welche über verschiedene Funkzugangstechnologien empfangen wurden. Weiterhin umfasst der Begriff Speicherkapazität auch die Speicherkapazität von direkt mit der Funkstation verbundenen Einrichtungen zur Verarbeitung der von der Funkstation empfangenen Informationen.

In einer bevorzugten Ausführungsform der Erfindung sind die mindestens zwei Signale eine der mindestens einen Funkstation bekannte Trainingssequenz. Die Funkstation empfängt in diesem Fall identische Signale, nämlich die Trainingssequenz, von verschiedenen Funkzugangseinrichtungen, welche gegebenenfalls verschiedenen Funkkommunikationssystemen angehören können. Da die Trainingssequenz der Funkstation bekannt ist, kann sie dieser entnehmen, dass auf den Empfang der Trainingssequenz eine Bestimmung des mindestens einen Parameters erfolgen soll.

Vorzugsweise kann die Netzeinrichtung den mindestens einen Parameter bei einer Anweisung für die mindestens zwei Funkzugangseinrichtungen zur Versendung von Informationen an die mindestens eine Funkstation verwenden. Die Netzeinrichtung teilt dem oder den Funkkommunikationssystemen mit, dass sie Informationen an die mindestens eine Funkstation senden sollen. Im Fall ii unterscheiden sich diese Mitteilungen an die Funkkommunikationssysteme in der Regel voneinander. Der mindestens eine Parameter geht hierbei z.B. in den Inhalt, die Art oder den Zeitpunkt der Anweisung ein. Insbesondere ermittelt die Netzeinrichtung aus dem mindestens einen Parameter einen zeitlichen Versatz zwischen dem Versenden von Informationen an die mindestens eine Funkstation durch eine erste der mindestens zwei Funkzugangseinrichtungen und dem Versenden von Informationen an die mindestens eine Funkstation durch eine zweite der mindestens zwei Funkzugangseinrichtungen. Die Netzeinrichtung teilt in diesem Fall zwei Funkzugangseinrichtungen entweder direkt oder über andere Einrichtungen mit, dass sie Informationen an die mindestens eine Funkstation in einem bestimmten Zeitabstand, welchen die Netzeinrichtung aus dem Parameter ermittelt hat, senden sollen. Hierzu wird den Funkzugangseinrichtungen in der Regel ein Sendezeitpunkt vorgegeben. Liegt ein heterogenes Netzwerk mit mindestens drei Funkkommunikationssystemen vor, so kann die Netzeinrichtung den zeitlichen Versatz jeweils paarweise für zwei Funkkommunikationssysteme ermitteln. In einer Mitteilung an die Funkzugangseinrichtungen müssen die Sendezeitpunkte der anderen Funkzugangseinrichtungen nicht enthalten sein.

Einer Ausgestaltung der Erfindung zufolge verwendet die mindestens eine Funkstation den mindestens einen Parameter bei der Auswertung von Informationen von den mindestens zwei Funkzugangseinrichtungen. Die Auswertung von Informationen umfasst hierbei jegliche Verarbeitung der Informationen, nachdem sie von einer Antenne der Funkstation empfangen wurden, wie z.B. die Speicherung, Decodierung, Übermittlung an andere Einrichtungen und das Abspielen von Informationen.

Vorzugsweise wird die Verwendung des mindestens einen Parameters durch die mindestens eine Funkstation von der Netzeinrichtung angewiesen. Die Anweisung erfolgt hierbei im Fall ii über eines oder mehrere der Funkkommunikationssysteme. Somitentscheidet die Netzeinrichtung, auf welche Weise der mindestens eine Parameter bei der Auswertung von Informationen einfließen soll.

In einer Weiterbildung der Erfindung ermittelt die mindestens eine Funkstation aus dem mindestens einen Parameter eine Wartezeit nach dem Empfang von Informationen von einer ersten der mindestens zwei Funkzugangseinrichtungen auf den Empfang von Informationen von einer zweiten der mindestens zwei Funkzugangseinrichtungen. Während der Wartezeit können die zuerst empfangenen Informationen gespeichert oder auch auf andere Weise ausgewertet werden. Die Wartezeit zeichnet sich dadurch aus, dass nach Ablauf der Wartezeit Maßnahmen getroffen werden, abhängig davon, ob die Informationen von der zweiten Funkzugangseinrichtung mittlerweile empfangen wurden oder nicht.

Die oben genannte Aufgabe wird hinsichtlich des eingangs an zweiter Stelle genannten Verfahrens durch ein Verfahren mit den Merkmalen des Anspruchs 11 gelöst.

Vorteilhafte Weiterbildungen und Ausgestaltungen dieses Verfahrens sind Gegenstand von weiteren Unteransprüchen.

Das erfindungsgemäße Verfahren kann zum Betreiben
i. von einem Funkkommunikationssystem mit mindestens zwei Einheiten einer Funkressource oder
ii. von mindestens zwei Funkkommunikationssystemen eingesetzt werden. Mindestens jeweils ein Signal von der mindestens einen Funkstation wird in den mindestens zwei Funkzugangseinrichtungen empfangen. Erfindungsgemäß bestimmt die Netzeinrichtung aufgrund von Empfangszeitpunkten der mindestens zwei Signale

i. in den mindestens zwei Funkzugangseinrichtungen des einen Funkkommunikationssystems oder
ii. in den mindestens zwei Funkkommunikationssystemen mindestens einen Parameter für eine Synchronisation der Kommunikation

i. in den mindestens zwei Einheiten der Funkressource des einen Funkkommunikationssystems oder
ii. in den mindestens zwei Funkkommunikationssystemen.
   Bei der zu synchronisierenden Kommunikation handelt es sich um die Versendung von aufgespalteten Informationen, wobei über eine der mindestens zwei Funkzugangseinrichtungen ein erster Teil der Informationen und über eine andere der mindestens zwei Funkzugangseinrichtungen ein zweiter von dem ersten Teil unterschiedlicher Teil der Informationen zu der mindestens einen Funkstation gesendet wird.

Im Fall i ist es vorteilhaft, wenn die zur Versendung des mindestens einen Signals von der Funkstation verwendeten Funkressourcen mit den mindestens zwei Einheiten der Funkressource des Funkkommunikationssystems übereinstimmen, für welche erfindungsgemäß der Synchronisationsparameter bestimmt wird. So kann zur Versendung eines Signals zu einer ersten Funkzugangseinrichtung eine erste Einheit der mindestens zwei Einheiten der Funkressource, zur Versendung eines Signals zu einer zweiten Funkzugangseinrichtung eine zweite Einheit der mindestens zwei Einheiten der Funkressource, usw. verwendet werden. Es ist jedoch auch möglich, dass die zur Versendung des mindestens einen Signals zu Synchronisationszwecken von der Funkstation verwendeten Funkressourcen sich von denjenigen Funkressourcen unterscheiden, für welche der Synchronisationsparameter bestimmt wird.

Im Fall ii kann es sich bei den Empfangszeitpunkten um die Empfangszeitpunkte von verschiedenen Einrichtungen eines Funkkommunikationssystems handeln. Insbesondere können hier die Empfangszeitpunkte in den jeweiligen Einrichtungen zur Funkzugangskontrolle verwendet werden. Z.B. können bei verschiedenen Funkkommunikationssystemen die Empfangszeitpunkte von einander funktional entsprechenden Einrichtungen verwendet werden.

Werden im Fall ii zwei oder mehrere Funkkommunikationssysteme mit der gleichen Funkzugangstechnologie und Funkfrequenz betrieben, so kann ein Signal auf identische Weise zu den beiden Funkkommunikationssystemen gesendet werden. Beide Funkkommunikationssysteme empfangen in diesem Fall das identische gesendete Signal. Bei verschiedenen Funkzugangstechnologien beispielsweise kann die Funkstation mehrere Signale senden, so dass jede beteiligte Funkzugangseinrichtung zumindest ein Signal empfängt.

Vorzugsweise besteht der mindestens eine Parameter aus einer Differenz von Empfangszeitpunkten.

Die mindestens zwei Signale können eine dem einen oder den mindestens zwei Funkkommunikationssystemen bekannte Trainingssequenz sein.

In einer Weiterbildung der Erfindung verwendet die Netzeinrichtung den mindestens einen Parameter bei einer Anweisung für die mindestens eine Funkstation zur Versendung von Informationen an die mindestens zwei Funkzugangseinrichtungen. Die Netzeinrichtung teilt der Funkstation mit, dass sie Informationen an die mindestens zwei Funkzugangseinrichtungen senden soll. Der mindestens eine Parameter geht hierbei z.B. in den Inhalt, die Art oder den Zeitpunkt der Anweisung ein. Der Inhalt der Anweisung kann z.B. die Art der zu sendenden Information, die Aufteilung der Information in parallele Datenströme, welche zu dem oder den Funkkommunikationssystemen zu senden sind, den Sendezeitpunkt der Information und die zu verwendende Funkressource beinhalten.

Insbesondere kann die Netzeinrichtung aus dem mindestens einen Parameter einen zeitlichen Versatz zwischen dem Versenden von Informationen an eine erste der mindestens zwei Funkzugangseinrichtungen durch die mindestes eine Funkstation und dem Versenden von Informationen an eine zweite der mindestens zwei Funkzugangseinrichtungen durch die mindestens eine Funkstation ermitteln. Die Netzeinrichtung weist die mindestens eine Funkstation an, Informationen an die Funkkommunikationssysteme mit einem bestimmten zeitlichen Abstand zu versenden. Hierzu können der Funkstation z.B. die Sendezeitpunkte mitgeteilt werden, oder aber auch ein Sendezeitpunkt und eine Zeitspanne bis zur Versendung der folgenden Information, oder auch nur die Zeitspanne.

In einer Ausgestaltung der Erfindung verwendet die Netzeinrichtung den mindestens einen Parameter bei der Auswertung von Informationen von der mindestens einen Funkstation.

Die oben genannte Aufgabe wird in Bezug auf die Netzeinrichtung durch eine Einrichtung mit den Merkmalen des Anspruchs 17 gelöst.

Die erfindungsgemäße Netzeinrichtung kann zum Betreiben
i. von einem Funkkommunikationssystem mit mindestens zwei Einheiten einer Funkressource oder
ii. von mindestens zwei Funkkommunikationssystemen eingesetzt werden. Die Netzeinrichtung weist erfindungsgemäß Mittel zum Zuweisen von an die mindestens eine Funkstation zu sendenden Informationen an die mindestens zwei Funkzugangseinrichtungen auf, wobei es sich bei den Informationen um aufgespaltete Informationen handelt, von welchen über eine der mindestens zwei Funkzugangseinrichtungen ein erster Teil und über eine andere der mindestens zwei Funkzugangseinrichtungen ein zweiter von dem ersten Teil unterschiedlicher Teil zu der mindestens einen Funkstation zu senden ist, und Mittel zum Zuweisen von Sendezeitpunkten der an die mindestens eine Funkstation zu sendenden Informationen. Die Netzeinrichtung ist insbesondere zur Durchführung des erfindungsgemäßen Verfahrens geeignet, sie kann weitere Mittel und Vorrichtungen zur Durchführung der Verfahrensschritte aufweisen. Weiterhin weist die Netzeinrichtung Mittel zum Bestimmen von mindestens einem Parameter für eine Synchronisation der Kommunikation, wobei es sich bei der zu synchronisierenden Kommunikation um die Versendung der aufgespalteten Informationen handelt,

i. in den mindestens zwei Einheiten der Funkressource des einen Funkkommunikationssystems oder
ii. in den mindestens zwei Funkkommunikationssystemen aufgrund von Empfangszeitpunkten von jeweils mindestens einem Signal

i. in den mindestens zwei Funkzugangseinrichtungen des einen Funkkommunikationssystems oder
ii. in den mindestens zwei Funkkommunikationssystemen auf.

Im Fall i kann die Netzeinrichtung insbesondere die mindestens zwei Funkzugangseinrichtungen anweisen, die zu sendenden Informationen unter Verwendung von jeweils unterschiedlichen Einheiten der mindestens zwei Einheiten der Funkressource des Funkkommunikationssystems zu versenden.

Die Erfindung wird im folgenden anhand eines Ausführungsbeispiels näher erläutert. Dabei zeigen
- Figur 1:: einen Ausschnitt aus zwei Funkkommunikationssystemen,
- Figur 2:: ein Ablaufdiagramm eines erfindungsgemäßen Verfahrens,
- Figur 3:: Ablaufdiagramme zur Verwendung des erfindungsgemäßen Verfahrens.

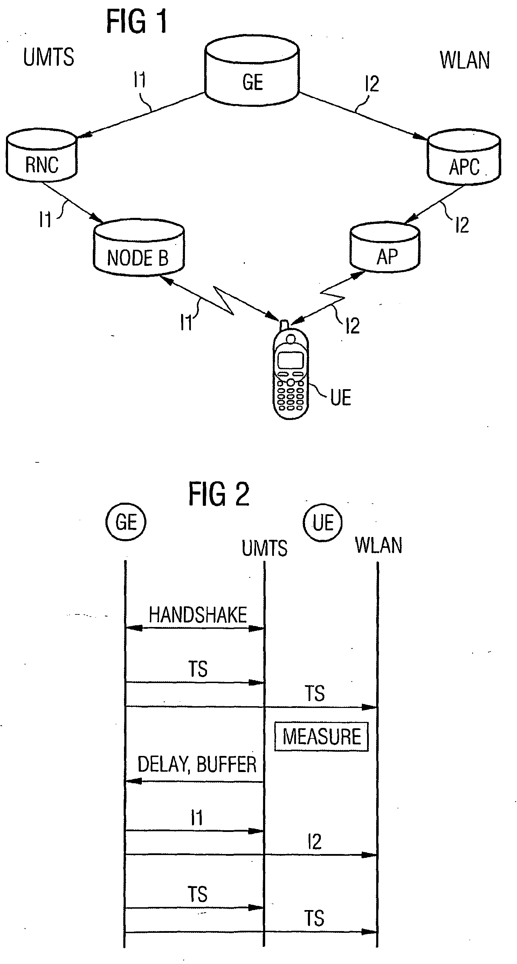

Bei zwei Funkkommunikationssystemen könnte es sich vor allem um ein lokales Funkkommunikationssystem, z.B. ein WLAN, und um ein zumindest regionales Funkkommunikationssystem, z.B. ein UMTS System, handeln. Figur 1 zeigt einen Ausschnitt aus einem ersten Funkkommunikationssystem der dritten Generation UMTS und einen Ausschnitt aus einem lokalen zweiten Funkkommunikationssystem WLAN. Das erste Funkkommunikationssystem UMTS besteht aus einer Einrichtung zur Funkzugangskontrolle RNC (Radio Network Controller) und einer Funkzugangseinrichtung NODE B, welche über Funk mit einer Funkstation UE (User Equipment) kommuniziert. Das zweite Funkkommunikationssystem WLAN, welches z.B. nach dem Standard Hiperlän/2 ausgestaltet sein kann, besteht ebenfalls aus einer Einrichtung zur Funkzugangskontrolle APC (Access Point Controller) und einer Funkzugangseinrichtung AP, welche über Funk mit einer Funkstation UE kommuniziert. Die Funktechnologie der beiden Funkkommunikationssysteme UMTS und WLAN kann sich hierbei unterscheiden oder auch identisch sein. Die Funkstation UE befindet sich in einem gemeinsamen Funkabdeckungsbereich der beiden Funkzugangseinrichtungen NODE B und AP, so dass sie Signale von diesen beiden gleichzeitig oder nacheinander empfangen und auch zu diesen senden kann.

Die beiden Einrichtung zur Funkzugangskontrolle RNC und APC sind mit einer gemeinsamen Netzeinrichtung GE verbunden. Die Netzeinrichtung GE dient der gemeinsamen Funkressourcenverwaltung der beiden Funkkommunikationssysteme UMTS und WLAN. Hierzu erhält sie Informationen über die Auslastung und Anforderungen von Funkressourcen durch Funkstationen von den Einrichtung zur Funkzugangskontrolle RNC und APC. Figur 1 stellt somit einen Ausschnitt aus einem heterogenen Netzwerk mit starker Kopplung dar.

Während Figur 1 eine Konstellation gemäß dem oben beschriebenen Fall ii darstellt, ist es gemäß dem oben beschriebenen Fall i auch möglich, dass das erfindungsgemäße Verfahren innerhalb ausschließlich eines Funkkommunikationssystems, wie z.B. innerhalb eines UMTS Funkkommunikationssystems, eingesetzt wird. In diesem Fall kommuniziert die Funkstation UE mit einer ersten und einer zweiten Funkzugangseinrichtung NODE B des gleichen Systems, welche mit der gleichen oder einer unterschiedlichen Einrichtung zur Funkzugangskontrolle RNC verbunden sind. Mit der ersten Funkzugangseinrichtung kommuniziert die Funkstation UE zumindest unter anderem auf einem ersten Frequenzband und mit der zweiten Funkzugangseinrichtung kommuniziert sie zumindest unter anderem auf einem zweiten Frequenzband. Bei den beiden Frequenzbändern kann es sich z.B. um ein Core Band bei etwa 2 GHz und ein Extension Band, z.B. bei 2,5 bis 2,69 GHz, eines UMTS Funkkommunikationssystems handeln.

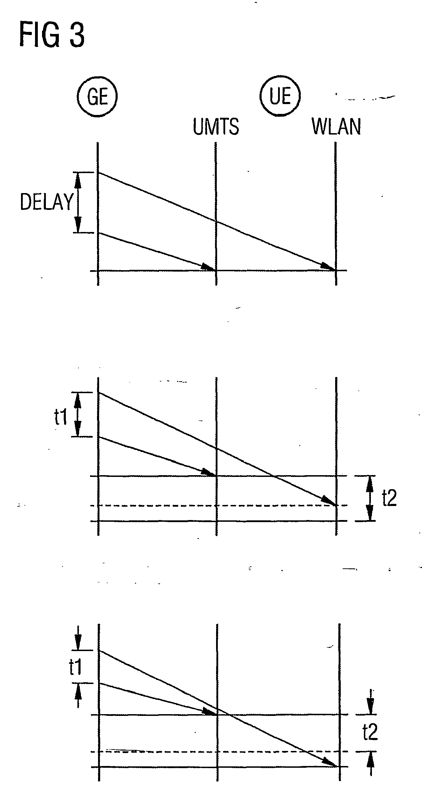

Im folgenden wird die Erfindung im Rahmen des Falles ii eines heterogenen Netzes bestehend aus zwei unterschiedlichen Funkkommunikationssystemen näher erläutert. Aufgrund der Analogie zwischen den beiden Fällen i und ii wird auf eine ausführliche Beschreibung des Vorgehens im Fall i verzichtet. Zur Übertragung der Vorgehensweise des Falles ii auf den Fall i muss die gemeinsamen Netzeinrichtung GE durch eine Einrichtung des einen Funkkommunikationssystems ersetzt werden, die Einrichtungen zur Funkzugangskontrolle RNC und APC durch eine oder auch zwei Einrichtungen zur Funkzugangskontrolle des einen Funkkommunikationssystems, und die beiden Funkzugangspunkte NODE B und AP durch zwei Funkzugangspunkte des einen Funkkommunikationssystems. Die in den Figuren 2 und 3 dargestellten Funkschnittstellen UMTS und WLAN zwischen der Funkstation UE und dem UMTS-Funkkommunikationssystem und zwischen der Funkstation UE und dem WLAN können entsprechend durch eine erste Funkschnittstelle zwischen einer ersten Funkzugangseinrichtung des einen Funkkommunikationssystems, welche zumindest unter anderem ein erstes Frequenzband verwendet, und der Funkstation UE, und durch eine zweite Funkschnittstelle zwischen einer zweiten Funkzugangseinrichtung des einen Funkkommunikationssystems, welche zumindest unter anderem ein zweites Frequenzband verwendet, und der Funkstation UE ersetzt werden.

Eine Reihe von Informationen, welche die Funkstation UE empfängt, lassen sich in verschiedene Teile aufspalten. So können Video-Daten z.B. in eine Basisschicht (base layer), welche die wichtigsten Informationen niedriger Frequenz enthält und in eine Erweiterungsschicht (enhancement layer) getrennt werden. Der Empfang der Erweiterungsschicht ohne die Basisschicht würde zu keiner den Mindestanforderungen entsprechenden Qualität führen. Weiterhin lassen sich Informationen aus dem Internet in ein Hauptobjekt (main object), welches die wesentlichen Informationen zur Organisation einer Internetseite umfasst, und ein Inline Objekt (inline object) gliedern. Andere Beispiele für die Aufspaltung von Informationen ist eine Trennung von visuellen und akustischen Informationen oder eine Trennung von Echtzeitinformationen und der dazugehörigen Signalisierung.

Diese verschiedenen Teile können von verschiedenen Funkzugangseinrichtungen parallel an die Funkstation übermittelt werden. Eine derartige Aufspaltung von Daten ermöglicht es, den Funkstationen unter Einbeziehung der Charakteristika der verschiedenen Funkkommunikationssysteme wie z.B. unterschiedliche Datenraten, aktuelle Auslastungssituationen, Abdeckungsbereiche, angebotene Dienste usw., eine große Übertragungsqualität (QoS, Quality of Service) zu bieten. Weiterhin ermöglicht eine Versendung von Informationen durch verschiedene Funkkommunikationssysteme eine effiziente Ausnutzung der knappen Funkressourcen. Im Fall i können die verschiedenen Teile dann über verschiedene Frequenzbänder parallel an die Funkstation gesendet werden. Die Versendung von verschiedenen Teilen von Informationen innerhalb eines Funkkommunikationssystems durch verschiedene Funkzugangseinrichtungen ermöglicht einen Lastausgleich (load balancing) zwischen den verschiedenen Funkzugangseinrichtungen.

Bei der Zuordnung von aufgespaltenen Teilen von Informationen werden in der Regel wichtige Informationsteile Funkkommunikationssystemen bzw. Funkzugangseinrichtungen zugewiesen, welche eine hohe Wahrscheinlichkeit für eine erfolgreiche Übertragung aufweisen. Die Eigenschaft einer hohen Übertragungswahrscheinlichkeit ist meist mit niedrigen Datenraten verbunden. Die restlichen Informationen können von einem anderen Funkkommunikationssystem bzw. einer anderen-Funkzugangseinrichtung mit einer höheren Datenrate übertragen werden. Erreichen eine Funkstation beide Datenströme, so können diese von der Funkstation addiert bzw. kombiniert werden, woraus eine hohe Dienstqualität resultiert. Eine möglichst gute Ausnutzung der Funkressourcen erfordert hierbei eine intelligente Art der Aufteilung von Informationen in verschiedene parallele Datenströme.

Eine Aufspaltung von Informationen in verschiedene Teile kann in der Netzeinrichtung GE oder in einer mit der Netzeinrichtung verbundenen Einrichtung in Form eines Servers für verschiedene Dienste wie z.B. Videoübertragungen oder multimediale Übertragungen stattfinden. In letzterem Fall erhalten die verschiedenen Teile der Informationen bzw. die verschiedenen Datenströme von dem Server eine Kennzeichnung, so dass die Netzeinrichtung GE die Teile den Funkkommunikationssystemen zuweisen kann. Unabhängig von dem Ort der Aufspaltung der zu sendenden Daten teilt die Netzeinrichtung GE den Einrichtung zur Funkzugangskontrolle RNC und APC mit, welche Teile von der jeweiligen Funkzugangseinrichtung NODE B und AP an die Funkstation UE zu senden sind.

Verschiedene Funkkommunikationssysteme weisen unterschiedliche Verzögerungscharakteristiken auf. Unter der Verzögerung wird die Zeitspanne verstanden, welche vergeht, bis abgesandte Informationen von einer Funkstation empfangen werden. Diese Zeitspanne beginnt zu dem Zeitpunkt zu laufen, an dem die Informationen von der jeweiligen Einrichtung zur Funkzugangskontrolle versendet werden. Verantwortlich für die im allgemeinen unerwünschte Verzögerung sind nicht nur die physikalischen Signallaufzeiten längs der Übertragungsstrecke, sondern auch übertragungs- bzw. protokolltechnische Funktionen (z.B. Multiplex, Vermittlung, Routing, Zwischenspeicherung) und technische Vorgänge vor dem Senden des Nachrichterisignals (z.B. Datenkompression, Verschlüsselung, Kanalcodierung). Als qualitative Beeinträchtigungen von Übertragungen und Verbindungen treten oft störende zeitliche Schwankungen der Verzögerung auf. Die Varianz der Verzögerung wird Jitter, d.h. Verzögerungsschwankung, genannt. Auch innerhalb eines einzigen Funkkommunikationssystems unterscheiden sich die Laufzeiten von Signalen zwischen einer ersten Funkzugangseinrichtung und einer Funkstation und einer zweiten Funkzugangseinrichtung und der Funkstation.

Im Beispiel der Figur 1 wird eine erste Information I1 von der Netzeinrichtung GE über die Einrichtung zur Funkzugangskontrolle RNC und über die Funkzugangseinrichtung NODE B zur Funkstation UE gesandt. Ebenso wird eine zweite Information 12 von der Netzeinrichtung GE über die Einrichtung zur Funkzugangskontrolle APC und über die Funkzugangseinrichtung AP zur Funkstation UE gesandt. Aufgrund der unterschiedlichen Verzögerungscharakteristiken der beiden Funkkommunikationssysteme UMTS und WLAN erreichen die Informationen I1 und I2 trotz gleichzeitiger Versendung durch die Netzeinrichtung GE die Funkstation UE nicht gleichzeitig. Handelt es sich bei der Information I1 z.B. um die Basisschicht und bei der Information I2 um die Erweiterungsschicht einer Videoübertragung, so führt ein nicht gleichzeitiges Eintreffen der beiden Informationen I1 und I2 ohne ausgleichenden Synchronisationsmechanismus am Empfänger zu Qualitätsverlusten. Dies wirkt sich besonders drastisch bei der Übertragung von parallelen Datenströmen durch mehrere Funkkommunikationssysteme im Falle von Echtzeitdaten aus. Zur Vermeidung von derartigen Qualitätsverlusten kann die Netzeinrichtung die Einrichtungen zur Funkzugangskontrolle RNC und APC anweisen, die jeweilige Information I1 oder I2 zu einem bestimmten, die Synchronisierung verbessernden, Zeitpunkt zu versenden. Weiterhin kann die Funkstation UE die zuerst empfangene Information I1 oder I2 bis zu dem Zeitpunkt speichern, zu dem die jeweilige andere Information I1 oder I2 bereitsteht.

Figur 2 zeigt ein Ablaufdiagramm eines erfindungsgemäßen Verfahrens zur Synchronisierung der Kommunikation in zwei Funkkommunikationssystemen. Die Funkstation UE befindet sich gemäß Figur 1 in einem gemeinsamen Funkabdeckungsbereich der beiden Funkkommunikationssysteme UMTS und WLAN, so dass sie Signale entweder über das Funkkommunikationssystem UMTS oder über das Funkkommunikationssystem WLAN oder über beide Funkkommunikationssysteme empfangen und versenden kann. Zu Beginn wird in einem Verfahrensschritt HANDSHAKE über die Aufteilung von zu der Funkstation UE zu sendenden Informationen aufgrund der Qualitätsanforderungen der Funkstation UE und aufgrund der Kapazitäten der Funknetze und der Funkstation UE entschieden. Die Kommunikation während des Verfahrensschrittes HANDSHAKE kann entweder über das Funkkommunikationssystem UMTS (in Figur 2 dargestellt) oder über das Funkkommunikationssystem WLAN oder über beide Funkkommunikationssysteme abgewickelt werden.

Daraufhin wird der Funkstation UE auf Aufforderung der Netzeinrichtung GE eine der Funkstation bekannte Trainingssequenz TS gleichzeitig über das Funkkommunikationssystem UMTS und über das Funkkommunikationssystem WLAN gesendet. Gleichzeitig bedeutetet hierbei, dass die Netzeinrichtung GE die Trainingssequenz TS gleichzeitig an die Einrichtungen zur Funkzugangskontrolle RNC und APC der beiden Funkkommunikationssysteme sendet. Die Übermittlung der Trainingssequenz TS erfolgt hierbei unter Verwendung der gleichen Funkressource und des gleichen Multiplexverfahrens, welche auch für die Versendung der parallelen Datenströme angewandt werden soll. Im Fall ii bedeutet dies, dass die Trainingssequenz von der ersten Funkzugangseinrichtung auf dem ersten Frequenzband und von der zweiten Funkzugangseinrichtung auf dem zweiten Frequenzband abgestrahlt wird. In einem nächsten Verfahrensschritt MEASURE misst die Funkstation UE die Empfangszeitpunkte der beiden Signale TS und bildet die Differenz DELAY aus den beiden Empfangszeitpunkten, d.h. die Verzögerungsdifferenz zwischen über das Funkkommunikationssystem UMTS und über das Funkkommunikationssystem WLAN gesendeten Signalen. Die Motivation zur Durchführung dieser Verfahrensschritte liegt darin, dass hierdurch Kenntnis über die zeitliche Diskrepanz zwischen dem Empfang zweier paralleler Datenströme erlangt wird, welche über die beiden Funkkommunikationssysteme UMTS und WLAN gesendet wurden. Außerdem ermittelt die Funkstation UE ihre maximale Speicherkapazität BUFFER für über das Funkkommunikationssystem UMTS und über das Funkkommunikationssystem WLAN empfangene Informationen. Mittels einem Signal DELAY, BUFFER übermittelt die Funkstation UE sowohl die ermittelte Verzögerungsdifferenz DELAY als auch die maximale Speicherkapazität BUFFER an die Netzeinrichtung GE. Diese Übermittlung kann sowohl über das Funkkommunikationssystem UMTS als auch über das Funkkommunikationssystem WLAN, oder auch in zwei Nachrichten aufgeteilt über beide Funkkommunikationssysteme UMTS und WLAN durchgeführt werden.

Das betreffende Funkkommunikationssystem UMTS oder WLAN leitet das Signal DELAY, BUFFER an die Netzeinrichtung GE weiter. Anschließend weist die Netzeinrichtung GE die Funkkommunikationssysteme UMTS und WLAN an, die Informationen I1 und I2 an die Funkstation als parallele Datenströme zu senden. Erkennt die Netzeinrichtung an der Information des Signals DELAY, BUFFER, dass eine Synchronisierung der beiden Funkkommunikationssysteme UMTS und WLAN nicht möglich ist, so kann sie an dieser Stelle beschließen, die Information ausschließlich über eines der beiden Funkkommunikationssysteme UMTS oder WLAN zu versenden.

Die Übermittlung der Trainingssequenzen TS kann wiederholt werden, z.B. in regelmäßigen Zeitabständen. Sie kann außer auf Aufforderung durch die Netzeinrichtung GE auch auf Initiative der Funkstation UE gestartet werden. Eine Anforderung der Funkstation UE nach einer Übermittlung von Trainingssequenzen zur Synchronisierung kann z.B. dann sinnvoll sein, wenn die Funkstation ein Handover durchgeführt hat oder ein Verbindungszusammenbruch erfolgte.

Eine periodische Aussendung_der Trainingssequenz führt dazu, dass eine über den Zeitverlauf hinweg gute Synchronisierung zwischen mehreren Funkkommunikationssystemen bzw. zwischen mehreren Frequenzbändern eines Funkkommunikationssystems hergestellt und aufrecht erhalten werden kann. Bezüglich der ermittelten Verzögerungsdifferenzen ist es erstrebenswert, dass sich die Verzögerungsdifferenzen mit der Zeit nur wenig verändern, so dass eine hohe Stabilität bei der Dekodierung der übertragenen Informationen erreicht werden kann. Außerdem sollten die Verzögerungsdifferenzen möglichst gering ausfallen, wodurch die Qualität der Übertragung von Informationen über mehrere Funkkommunikationssysteme oder Frequenzbänder eines Funkkommunikationssystems gesteigert wird.

Die Versendung des Signals DELAY, BUFFER durch die Funkstation UE kann auch gleichzeitig zum Empfang der Informationen I1 und I2 stattfinden. In diesem Fall können die Informationen über die Verzögerungsdifferenz DELAY und über die maximale Speicherkapazität BUFFER von der Netzeinrichtung erst für die Synchronisierung der darauffolgenden Übermittlung von Informationen an die Funkstation UE eingesetzt werden.

Die ermittelte Verzögerungsdifferenz DELAY kann von der Netzeinrichtung GE auf verschiedene Weise eingesetzt werden. Figur 3 zeigt anhand von Ablaufdiagrammen Beispiele für Verwendungsmöglichkeiten. Die Entscheidung, auf welche Weise die Verzögerungsdifferenz DELAY eingesetzt werden soll, kann von der Speicherkapazität einer Funkstation, von der Größe der ermittelten Verzögerungsdifferenz, oder auch von der Art der zu übertragenden Daten abhängen.

Das oberste Ablaufdiagramm der Figur 3 zeigt den Fall, dass die Netzeinrichtung GE die Funkkommunikationssysteme UMTS und WLAN anweist, die jeweiligen Informationen zu bestimmten Zeitpunkten zu senden. Diese Zeitpunkte sind so-gewählt, dass die Zeitspanne zwischen den Sendezeitpunkten die Verzögerungsdifferenz DELAY ausgleicht. Somit empfängt die Funkstation UE die Signale der beiden Funkkommunikationssysteme UMTS und WLAN gleichzeitig. Dieser Fall entspricht der genauen Synchronisierung der Kommunikation in den-beiden Funkkommunikationssysteme UMTS und WLAN. Nach dem Empfang der beiden Signale kann die Funkstation diese decodieren und synchron kombinieren.

Das mittlere Ablaufdiagramm der Figur 3 zeigt eine weitere Verwendungsmöglichkeit der Verzögerungsdifferenz DELAY. Die Netzeinrichtung GE weist die Funkkommunikationssysteme UMTS und WLAN an, die jeweiligen Informationen zu bestimmten Zeitpunkten zu senden, wobei die Differenz aus diesen Zeitpunkten einer Zeitspanne t1 entspricht. Die Länge der Zeitspanne t1 ermittelt die Netzeinrichtung GE in Abhängigkeit von der Verzögerungsdifferenz DELAY, sie kann der Länge der Verzögerungsdifferenz DELAY entsprechen oder auch kürzer oder länger als diese sein. Die Funkstation UE wird von der Netzeinrichtung angewiesen, eine Zeitspanne t2 nach dem Empfang der sie zuerst erreichenden Information auf den Empfang der anderen Information zu warten. Während dieser Zeitspanne wird die zuerst empfangene Information in der Funkstation UE gespeichert. Empfängt die Funkstation UE während der Zeitspanne t2 die zweite Information, so können die Informationen der beiden Funkkommunikationssysteme UMTS und WLAN bzw. für den Fall i der beiden Frequenzbänder des einen Funkkommunikationssystems synchron kombiniert werden.

Die Verwendung der Zeitspanne t2 kann dazu dienen, unerwartete Verzögerungen, welche nicht in der gemessenen Verzögerungsdifferenz DELAY enthalten sind, auszugleichen. Hierzu kann insbesondere der Zeitspanne t1 der Wert der Verzögerungsdifferenz DELAY zugewiesen werden, so dass bei Ausbleiben von unerwarteter Verzögerung die Synchronisierung auch ohne die Verwendung einer Zeitspanne t2 erreicht werden kann. In diesem Fall dient die Zeitspanne t2 als Sicherheitspuffer zur Erreichung einer hohen Qualität der empfangenen Daten.

Im Prinzip kann die Zeitspanne t1 gleich Null gesetzt werden, womit einzig die Zeitspanne t2 zur Erzielung des Synchronisierung zur Verfügung steht. Hierbei sollte jedoch darauf geachtet werden, dass den Funkstationen in der Regel nur ein stark begrenzter Speicher zur Verfügung steht. Somit kann die Zeitspanne t1 zur Entlastung des Speichers von Teilnehmerstationen sinnvoll eingesetzt werden.

Die Zeitspanne t2 wird von der Netzeinrichtung GE in Abhängigkeit von der Verzögerungsdifferenz DELAY, von der Zeitspanne t1 und von der jeweiligen Speicherkapazität der Funkstation UE ermittelt. Es ist auch möglich, dass eine Teilnehmerstation eine Zeitspanne t2 aufgrund ihrer Kenntnis der Verzögerungsdifferenz autonom ermittelt, d.h. eine Anweisung der Netzeinrichtung an die Funkstation über die Zeitspanne t2 erfolgt in diesem Fall nicht oder wird zumindest nicht benötigt. Die Länge der Zeitspanne t2 ist begrenzt durch die maximale Speicherkapazität der Funkstation, sie kann der Länge der Verzögerungsdifferenz DELAY entsprechen oder auch kürzer oder länger als diese sein.

In dem mittleren Ablaufdiagramm der Figur 3 empfängt die Funkstation UE zuerst die Information des Funkkommunikationssystems UMTS. Diese Information wird nun von der Funkstation UE gespeichert. Innerhalb der Zeitspanne t2 nach dem Empfang dieser Information empfängt die Funkstation die Information von dem Funkkommunikationssystem WLAN. Die beiden Informationen werden nun synchron kombiniert.

Das dritte Ablaufdiagramm der Figur 3 zeigt den Fall, dass die Information des Funkkommunikationssystems WLAN nach dem Ablauf der Zeitspanne t2 von der Funkstation UE empfangen wird. In diesem Fall verwirft die Funkstation die Information des Funkkommunikationssystems WLAN und wertet die Information des Funkkommunikationssystems UMTS ohne Verwendung der verworfenen Information aus. Wird z.B. die Basisschicht eines Videos über das Funkkommunikationssystem UMTS und die Erweiterungsschicht über das Funkkommunikationssystem WLAN übertragen, so kann bei einer Verwerfung der Erweiterurigsschicht die Basisschicht ohne Erweiterungsschicht angezeigt werden. Dies führt jedoch zu Qualitätsverlusten.

Allgemein sollte die Netzeinrichtung versuchen, die Zeitspanne t1 derart einzurichten, dass der Datenstrom der höheren Priorität, wie z.B. im Fall der Videoübertragung die Basisschicht, zuerst in der adressierten Funkstation empfangen wird. Dementsprechend sollte der weniger wichtige Datenstrom, wie z.B. im Fall der videoübertragung die Erweiterungsschicht, planmäßig nach der höher priorisierten Information empfangen werden. Tritt dennoch der Fall ein, dass der weniger wichtige Datenstrom vor dem wichtigeren von der Funkstation empfangen wird, so hängt die Vorgehensweise von den Vorgaben der Netzeinrichtung ab: der zuerst empfangene Datenstrom kann verworfen oder eine bestimmte Zeit gespeichert werden, um dann synchron oder asynchron zu der wichtigeren Information hinzugefügt zu werden. Dieses Vorgehen kann eine Mindestqualität der Videoübertragung, welche durch den alleinigen Empfang des Basisbands gegeben ist, gewährleisten.

Eine Speicherung der zuerst empfangenen Information in der Funkstation UE kann vermieden werden, wenn die Informationen der beiden Funkkommunikationssysteme UMTS und WLAN bzw. im Fall i der beiden Frequenzbänder nicht synchron, sondern asynchron kombiniert werden. In diesem Fall weist die Netzeinrichtung GE die Funkstation UE an, eine Zeitspanne t2 auf den Erhalt der zweiten Information zu warten, während welcher Zeitspanne jedoch bereits die Verarbeitung der zuerst empfangenen Information begonnen werden kann. Im Bezug auf die Übersendung von Videoinformationen bedeutet dies im Fall des mittleren Ablaufdiagramms der Figur 3, dass die zuerst erhaltene Basisschicht bereits vor dem Empfang der Erweiterungsschicht angezeigt werden kann. Nach dem Empfang der Erweiterungsschicht innerhalb des Zeitintervalls t2 wird die Erweiterungsschicht asynchron zur Basisschicht hinzugefügt, wodurch sich die Qualität der Videoinformation verbessert. Erreicht die Erweiterungsschicht, wie im dritten Ablaufdiagramm der Figur 3 dargestellt, die Funkstation UE nicht rechtzeitig, d.h. innerhalb des Zeitintervalls t2, so wird diese verworfen und die Basisschicht wird ohne die Erweiterungsschicht angezeigt.

Die Verzögerungsdifferenz DELAY kann zyklisch erneut bestimmt werden. Nach einer erneuten Bestimmung erfolgt auch eine Anpassung der Zeitspannen t1 und t2 an die geänderte Situation.

Alternativ oder ergänzend zum erfindungsgemäßem Verfahren können die Zeitspannen t1 und t2 von der Netzeinrichtung GE bzw. im Falle der Zeitspanne t2 auch von der Funkstation auch unabhängig von dem Ergebnis der Ermittlung der Verzögerungsdifferenz erfolgen. Es ist auch möglich, dass die Netzeinrichtung zu diesem Zweck eine Verzögerungsdifferenz schätzt.

Das erfindungsgemäße Verfahren wurde für die Übertragung von Informationen in Abwärtsrichtung beschrieben. Es ist jedoch in analoger Weise auf die Übertragung von Informationen in Aufwärtsrichtung anwendbar. In diesem Fall sendet die Funkstation ein Trainingssignal an mehrere Funkzugangseinrichtungen, welche dem gleichen oder einem unterschiedlichen Funkkommunikationssystemen angehören können. Im Fall i kann das Trainingssignal auf den beiden Frequenzbändern gesendet werden. Die Netzeinrichtung ermittelt eine Verzögerungsdifferenz, welche sie bei der Anweisung von Sendezeitpunkten an die Funkstation verwendet. Diese Verzögerungsdifferenz wird aus dem Empfangszeitpunkt des Trainingssignals in den Einrichtungen zur Funkzugangskontrolle des jeweiligen Funkkommunikationssystems bzw._im Fall i aus den Empfangszeitpunkten des Trainingssignals in den Funkzugangspunkten bestimmt. Hierzu übermitteln die Einrichtungen zur Funkzugangskontrolle die relevanten Empfangszeitpunkte an die Netzeinrichtung.

Von Vorteil erweist sich bei der Übertragung von parallelen Datenströmen in Aufwärtsrichtung, dass Einrichtungen zur Funkzugangskontrolle.in der Regel eine deutlich höhere Speicherkapazität als Funkstationen aufweisen, so dass an die Sendezeitpunkte für die Funkstationen geringere Anforderungen gestellt werden müssen als bei der Übertragung über mehrere Funkkommunikationssysteme in Abwärtsrichtung. Ein Ausgleich von Verzögerungsdifferenzen ist somit bei Übertragungen in Aufwärtsrichtung leichter möglich als bei einer solchen in Abwärtsrichtung. Zur Entlastung von netzseitiger Speicherkapazität und aus anderen Gründen kann jedoch auch bei der Übertragung in Aufwärtsrichtung eine entsprechende Zeitspanne von der Netzeinrichtung zugewiesen werden, nach deren Ablauf ein Datenstrom netzseitig verworfen werden kann.

## Patentansprüche

1. Verfahren zum Betreiben von
i. einem Funkkommunikationssystem mit mindestens zwei Einheiten einer Funkressource, umfassend jeweils ein Teilfunknetz und eine Funkzugangseinrichtung für die mindestens zwei Einheiten der Funkressource, oder
ii. mindestens zwei Funkkommunikationssystemen (UMTS, WLAN), umfassend jeweils ein Funknetz mit jeweils einer Funkzugangseinrichtung (NODE B, AP),
wobei die Funkabdeckungsbereiche der mindestens zwei Funkzugangseinrichtungen (NODE B, AP) sich in mindestens einem Überlappungsbereich örtlich überlappen,
wobei die Teilfunknetze oder die Funknetze mit einer Netzeinrichtung (GE) verbunden sind,
wobei sich mindestens eine Funkstation (UE) in dem mindestens einen Überlappungsbereich befindet, und
wobei jeweils mindestens ein Signal von den mindestens zwei Funkzugangseinrichtungen (NODE B, AP) zu der mindestens einen Funkstation (UE) gesendet wird,
wobei die mindestens eine Funkstation (UE) aufgrund der Empfangszeitpunkte der mindestens zwei Signale mindestens einen Parameter für eine Synchronisation der Kommunikation
i. in den mindestens zwei Einheiten der Funkressource des einen Funkkommunikationssystems, oder
ii. in den mindestens zwei Funkkommunikationssystemen (UMTS, WLAN)
bestimmt,
**dadurch gekennzeichnet,**
**dass** es sich bei der zu synchronisierenden Kommunikation um die Versendung von aufgespalteten Informationen (11, 12) handelt, bei welcher über eine der mindestens zwei Funkzugangseinrichtungen (NODE B, AP) ein erster Teil der Informationen (I1, I2) und über eine andere der mindestens zwei Funkzugangseinrichtungen (NODE B, AP) ein zweiter von dem ersten Teil unterschiedlicher Teil der Informationen (I1, I2) zu der mindestens einen Funkstation (UE) gesendet wird.

2. Verfahren nach Anspruch 1, **dadurch gekennzeich- net,**
**dass** der mindestens eine Parameter (DELAY) aus einer Differenz von Empfangszeitpunkten besteht.

3. Verfahren nach Anspruch 1 oder 2, **dadurch gekenn- zeichnet,**
**dass** die mindestens eine Funkstation (UE) den mindestens einen Parameter an mindestens eine der mindestens zwei Funkzugangseinrichtungen (NODE B, AP) übermittelt.

4. Verfahren nach Anspruch 3, **dadurch gekennzeich- net,**
**dass** die mindestens eine Funkstation (UE) an mindestens eine der mindestens zwei Funkzugangseinrichtungen (NODE B, AP) Information (BUFFER) über eine Speicherkapazität der mindestens einen Funkstation (UE) übermittelt.

5. Verfahren nach einem der Ansprüche 1 bis 4, **dadurch gekennzeichnet,**
**dass** die mindestens zwei Signale eine der mindestens einen Funkstation (UE) bekannte Trainingssequenz (TS) sind.

6. Verfahren nach einem der Ansprüche 3 bis 5, **dadurch gekennzeichnet,**
**dass** die Netzeinrichtung (GE) den mindestens einen Parameter bei einer Anweisung für die mindestens zwei Funkzugangseinrichtungen (NODE B, AP) zur Versendung von Informationen (I1, I2) an die mindestens eine Funkstation (UE) verwendet.

7. Verfahren nach Anspruch 6, **dadurch gekennzeich- net,**
**dass** die Netzeinrichtung (GE) aus dem mindestens einen Parameter einen zeitlichen Versatz (DELAY, t1) zwischen dem Versenden von Informationen (I1) an die mindestens eine Funkstation (UE) durch eine erste der mindestens zwei Funkzugangseinrichtungen (NODE B, AP) und dem Versenden von Informationen (I2) an die mindestens eine Funkstation (UE) durch eine zweite der mindestens zwei Funkzugangseinrichtungen (NODE B, AP) ermittelt.

8. Verfahren nach einem der Ansprüche 1 bis 7, **dadurch gekennzeichnet,**
**dass** die mindestens eine Funkstation (UE) den mindestens einen Parameter bei der Auswertung von Informationen (I1, I2) von den mindestens zwei Funkzugangseinrichtungen (NODE B, AP) verwendet.

9. Verfahren nach Anspruch 8, **dadurch gekennzeich- net,**
**dass** die Verwendung des mindestens einen Parameters durch die mindestens eine Funkstation (UE) von der Netzeinrichtung (GE) angewiesen wird.

10. Verfahren nach Anspruch 8 oder 9, **dadurch gekenn- zeichnet,**
**dass** die mindestens eine Funkstation (UE) aus dem mindestens einen Parameter eine Wartezeit (t2) nach dem Empfang von Informationen (I1) von einer ersten der mindestens zwei Funkzugangseinrichtungen (NODE B, AP) auf den Empfang von Informationen (I2) von einer zweiten der mindestens zwei Funkzugangseinrichtungen (NODE B, AP) ermittelt.

11. Verfahren zum Betreiben von
i. einem Funkkommunikationssystem mit mindestens zwei Einheiten einer Funkressource, umfassend jeweils ein Teilfunknetz und eine Funkzugangseinrichtung für die mindestens zwei Einheit der Funkressource, oder
ii. mindestens zwei Funkkommunikationssystemen (UMTS, WLAN), umfassend jeweils ein Funknetz mit jeweils einer Funkzugangseinrichtung (NODE B, AP),
wobei die Funkabdeckungsbereiche der mindestens zwei Funkzugangseinrichtungen (NODE B, AP) sich in mindestens einem Überlappungsbereich örtlich überlappen,
wobei die Teilfunknetze oder die Funknetze mit einer Netzeinrichtung (GE) verbunden sind,
wobei sich mindestens eine Funkstation (UE) in dem mindestens einen Überlappungsbereich befindet, und
wobei jeweils mindestens ein Signal von der mindestens einen Funkstation (UE) in den mindestens zwei Funkzugangseinrichtungen (NODE B, AP) empfangen wird,
**dadurch gekennzeichnet,**
**dass** die Netzeinrichtung (GE) aufgrund von Empfangszeitpunkten der mindestens zwei Signale
i. in den mindestens zwei Funkzugangseinrichtungen des einen Funkkommunikationssystems oder
ii. in den mindestens zwei Funkkommunikationssystemen (UMTS, WLAN)
mindestens einen Parameter für eine Synchronisation der Kommunikation
i. in den mindestens zwei Einheiten der Funkressource des einen Funkkommunikationssystems oder
ii. in den mindestens zwei Funkkommunikationssystemen (UMTS, WLAN)
bestimmt,
wobei es sich bei der zu synchronisierenden Kommunikation um die Versendung von aufgespalteten Informationen (I1, I2) handelt, bei welcher über eine der mindestens zwei Funkzugangseinrichtungen (NODE B, AP) ein erster Teil der Informationen (11, 12) und über eine andere der mindestens zwei Funkzugangseinrichtungen (NODE B, AP) ein zweiter von dem ersten Teil unterschiedlicher Teil der Informationen (I1, I2) zu der mindestens einen Funkstation (UE) gesendet wird.

12. Verfahren nach Anspruch 11, **dadurch gekennzeichnet,**
**dass** der mindestens eine Parameter (DELAY) aus einer Differenz von Empfangszeitpunkten besteht.

13. Verfahren nach einem der Ansprüche 11 oder 12, **dadurch gekennzeichnet,**
**dass** die mindestens zwei Signale eine dem einen Funkkommunikationssystem oder den mindestens zwei Funkkommunikationssystemen (UMTS, WLAN) bekannte Trainingssequenz (TS) sind.

14. Verfahren nach einem der Ansprüche 11 bis 13, **dadurch gekennzeichnet,**
**dass** die Netzeinrichtung (GE) den mindestens einen Parameter bei einer Anweisung für die mindestens eine Funkstation (UE) zur Versendung von Informationen an die mindestens zwei Funkzugangseinrichtungen (NODE B, AP) verwendet.

15. Verfahren nach Anspruch 14, **dadurch gekennzeichnet,**
**dass** die Netzeinrichtung (GE) aus dem mindestens einen Parameter einen zeitlichen Versatz zwischen dem Versenden von Informationen an eine erste der mindestens zwei Funkzugangseinrichtungen (NODE B, AP) durch die mindestens eine Funkstation (UE) und dem Versenden von Informationen an eine zweite der mindestens zwei Funkzugangseinrichtungen (NODE B, AP) durch die mindestens eine Funkstation (UE) ermittelt.

16. Verfahren nach einem der Ansprüche 11 bis 15, **dadurch gekennzeichnet,**
**dass** die Netzeinrichtung (GE) den mindestens einen Parameter bei der Auswertung von Informationen von der mindestens einen Funkstation (UE) verwendet.

17. Netzeinrichtung (GE) zum Betreiben von
i. einem Funkkommunikationssystem mit mindestens zwei Einheiten einer Funkressource, umfassend jeweils ein Teilfunknetz für die mindestens zwei Einheiten der Funkressource, oder
ii. mindestens zwei Funkkommunikationssystemen (UMTS, WLAN) mit jeweils einem Funknetz,
wobei die Netzeinrichtung (GE) mit den mindestens zwei Teilfunknetzen oder Funknetzen, umfassend jeweils eine Funkzugangseinrichtung (NODE B, AP), verbunden ist,
wobei die Funkabdeckungsbereiche der mindestens zwei Funkzugangseinrichtungen (NODE B, AP) sich in mindestens einem Überlappungsbereich örtlich überlappen,
wobei sich mindestens eine Funkstation (UE) in dem mindestens einen Überlappungsbereich befindet,
**gekennzeichnet durch**
Mittel zum Zuweisen von an die mindestens eine Funkstation (UE) zu sendenden Informationen (I1, I2) an die mindestens zwei Funkzugangseinrichtungen (NODE B, AP), wobei es sich bei den Informationen (11, 12) um aufgespaltete Informationen (11, 12) handelt, von welchen über eine der mindestens zwei Funkzugangseinrichtungen (NODE B, AP) ein erster Teil und über eine andere der mindestens zwei Funkzugangseinrichtungen (NODE B, AP) ein zweiter von dem ersten Teil unterschiedlicher Teil zu der mindestens einen Funkstation (UE) zu senden ist, und
Mittel zum Zuweisen von Sendezeitpunkten der an die mindestens eine Funkstation (UE) zu sendenden Informationen (I1, I2),
Mittel zum Bestimmen von mindestens einem Parameter für eine Synchronisation der Kommunikation, wobei es sich bei der zu synchronisierenden Kommunikation um die Versendung der aufgespalteten Informationen (I1, I2) handelt,
i. in den mindestens zwei Einheiten der Funkressource des einen Funkkommunikationssystems oder
ii. in den mindestens zwei Funkkommunikationssystemen (UMTS, WLAN)
aufgrund von Empfangszeitpunkten von jeweils mindestens einem Signal
i. in den mindestens zwei Funkzugangseinrichtungen des einen Funkkommunikationssystems oder
ii. in den mindestens zwei Funkkommunikationssystemen.

## Claims

1. Method for operating
i. a radio communication system with at least two units of a radio resource, each comprising a radio sub-network and a radio access device for the at least two units of the radio resource, or
ii. at least two radio communication systems (UMTS, WLAN), each comprising a radio network, each with a radio access device (NODE B, AP),
the radio coverage areas of the at least two radio access devices (NODE B, AP) overlapping locally in at least one overlap area,
the radio sub-networks or the radio networks being connected to a network device (GE),
at least one radio station (UE) being located in the at least one overlap area, and
at least one signal being sent in each instance from the at least two radio access devices (NODE B, AP) to the at least one radio station (UE),
the at least one radio station (UE) defining at least one parameter for synchronisation of communication
i. in the at least two units of the radio resource of the one radio communication system or
ii. in the at least two radio communication systems (UMTS, WLAN)
based on the receive times of the at least two signals,
**characterised in that**
the communication to be synchronised is the transmission of split information (11, 12) with a first part of the information (11, 12) being sent via one of the at least two radio access devices (NODE B, AP) and a second part of the information (I1, I2) that is different from the first part being sent via another of the at least two radio access devices (NODE B, AP) to the at least one radio station (UE).

2. Method according to claim 1, **characterised in that** the at least one parameter (DELAY) comprises a difference between receive times.

3. Method according to claim 1 or 2, **characterised in that** the at least one radio station (UE) transmits the at least one parameter to at least one of the at least two radio access devices (NODE B, AP).

4. Method according to claim 3, **characterised in that** the at least one radio station (UE) transmits information (BUFFER) about a storage capacity of the at least one radio station (UE) to at least one of the at least two radio access devices (NODE B, AP).

5. Method according to one of claims 1 to 4, **characterised in that**
the at least two signals are a training sequence (TS) known to the at least one radio station (UE).

6. Method according to one of claims 3 to 5, **characterised in that**
the network device (GE) uses the at least one parameter in an instruction for the at least two radio access devices (NODE B, AP) to send information (11, 12) to the at least one radio station (UE).

7. Method according to claim 6, **characterised in that**
the network device (GE) uses the at least one parameter to determine a time offset (DELAY, t1) between the transmission of information (I1) to the at least one radio station (UE) by a first of the at least two radio access devices (NODE B, AP) and the transmission of information (I2) to the at least one radio station (UE) by a second of the at least two radio access devices (NODE B, AP).

8. Method according to one of claims 1 to 7, **characterised in that**
the at least one radio station (UE) uses the at least one parameter when analysing information (I1, I2) from the at least two radio access devices (NODE B, AP).

9. Method according to claim 8, **characterised in that** the network device (GE) instructs the at least one radio station (UE) to use the at least one parameter.

10. Method according to claim 8 or 9, **characterised in that** the at least one radio station (UE) uses the at least one parameter to determine a wait time (t2) after the receipt of information (11) from a first of the at least two radio access devices (NODE B, AP) to the receipt of information (12) from a second of the at least two radio access devices (NODE B, AP).

11. Method for operating
i. a radio communication system with at least two units of a radio resource, each comprising a radio sub-network and a radio access device for the at least two units of the radio resource, or
ii. at least two radio communication systems (UMTS, WLAN), each comprising a radio network, each with a radio access device (NODE B, AP),
the radio coverage areas of the at least two radio access devices (NODE B, AP) overlapping locally in at least one overlap area,
the radio sub-networks or the radio networks being connected to a network device (GE),
at least one radio station (UE) being located in the at least one overlap area, and
at least one signal from the at least one radio station (UE) being received in each instance in the at least two radio access devices (NODE B, AP),
**characterised in that**
the network device (GE) uses receive times of the at least two signals
i. in the at least two radio access devices of a radio communication system or
ii. in the at least two radio communication systems (UMTS, WLAN)
to determine at least one parameter for synchronisation of communication
i. in the at least two units of the radio resource of the one radio communication system or
ii. in the at least two radio communication systems (UMTS, WLAN),
the communication to be synchronised being the transmission of split information (I1, I2) with a first part of the information (I1, I2) being sent via one of the at least two radio access devices (NODE B, AP) and a second part of the information (I1, I2) that is different from the first part being sent via another of the at least two radio access devices (NODE B, AP) to the at least one radio station (UE).

12. Method according to claim 11, **characterised in that** the at least one parameter (DELAY) comprises a difference between receive times.

13. Method according to one of claims 11 or 12, **characterised in that**
the at least two signals are a training sequence (TS) known to the one radio communication system or the at least two radio communication systems (UMTS, WLAN).

14. Method according to one of claims 11 to 13, **characterised in that**
the network device uses the at least one parameter in an instruction for the at least one radio station (UE) to transmit information to the at least two radio access devices (NODE B, AP).

15. Method according to claim 14, **characterised in that**
the network device (GE) uses the at least one parameter to determine a time offset between the transmission of information to a first of the at least two radio access devices (NODE B, AP) by the at least one radio station (UE) and the transmission of information (I2) to a second of the at least two radio access devices (NODE B, AP) by the at least one radio station (UE).

16. Method according to one of claims 11 to 15,
**characterised in that**
the network device (GE) uses the at least one parameter when analysing information from the at least one radio station (UE) .

17. Network device (GE) for operating
i. a radio communication system with at least two units of a radio resource, each comprising a radio sub-network for the at least two units of the radio resource, or
ii. at least two radio communication systems (UMTS, WLAN), each with a radio network,
the network device (GE) being connected to the at least two radio sub-networks or radio networks, each comprising a radio access device (NODE B, AP),
the radio coverage areas of the at least two radio access devices (NODE B, AP) overlapping locally in at least one overlap area,
at least one radio station (UE) being located in the at least one overlap area,
**characterised by**
means for allocating information (I1, I2) to be sent to the at least one radio station (UE) to the at least two radio access devices (NODE B, AP), with the information (I1, I2) being split information (I1, I2), of which a first part is to be sent via one of the at least two radio access devices (NODE B, AP) and a second part that is different from the first part is to be sent via another of the at least two radio access devices (NODE B, AP) to the at least one radio station (UE), and
means for allocating transmit times for the information (I1, I2) to be sent to the at least one radio station (UE),
means for defining at least one parameter for synchronisation of communication, the communication to be synchronised being the transmission of split information (I1, 12)
i. in the at least two units of the radio resource of the one radio communication system or
ii. in the at least two radio communication systems (UMTS, WLAN),
based on receive times of at least one signal in each instance
i. in the at least two radio access devices of the one radio communication system or
ii. in the at least two radio communication systems.

## Revendications

1. Procédé d'exploitation
i. d'un système de radiocommunication avec au moins deux unités d'une ressource radio, comprenant à chaque fois un réseau radio partiel et un dispositif d'accès radio pour les au moins deux unités de la ressource radio, ou
ii. d'au moins deux systèmes de radiocommunication (UMTS, WLAN), comprenant à chaque fois un réseau radio avec à chaque fois un dispositif d'accès radio (NODE B, AP),
les zones de couverture radio des au moins deux dispositifs d'accès radio (NODE B, AP) se chevauchant localement dans au moins une zone de chevauchement,
les réseaux radio partiels ou les réseaux radio étant reliés à un dispositif de réseau (GE),
au moins une station radio (UE) se trouvant dans l'au moins une zone de chevauchement et
au moins un signal étant envoyé à chaque fois à l'au moins une station radio (UE) par les au moins deux dispositifs d'accès radio (NODE B, AP),
l'au moins une station radio (UE) déterminant, sur la base des instants de réception des au moins deux signaux, au moins un paramètre pour une synchronisation de la communication
i. dans les au moins deux unités de la ressource radio du système de radiocommunication ou
ii. dans les au moins deux systèmes de radiocommunication (UMTS, WLAN),
**caractérisé en ce que**
pour la communication à synchroniser il s'agit de l'envoi d'informations dissociées (I1, I2) au cours duquel une première partie des informations (I1, I2) est envoyée par le biais d'un des au moins deux dispositifs d'accès radio (NODE B, AP) et une deuxième partie des informations (I1, I2), différente de la première partie, est envoyée par le biais d'un autre des au moins deux dispositifs d'accès radio (NODE B, AP), à l'au moins une station radio (UE).

2. Procédé selon la revendication 1, **caractérisé en ce que** l'au moins un paramètre (DELAY) est formé par une différence d'instants de réception.

3. Procédé selon la revendication 1 ou 2, **caractérisé en ce que** l'au moins une station radio (UE) transmet l'au moins un paramètre à au moins un des au moins deux dispositifs d'accès radio (NODE B, AP).

4. Procédé selon la revendication 3, **caractérisé en ce que** l'au moins une station radio (UE) transmet à au moins un des au moins deux dispositifs d'accès radio (NODE B, AP) une information (BUFFER) sur une capacité de mémoire de l'au moins une station radio (UE).

5. Procédé selon l'une des revendications 1 à 4, **caractérisé en ce que** les au moins deux signaux sont une séquence d'apprentissage (TS) connue de l'au moins une station radio (UE) .

6. Procédé selon l'une des revendications 3 à 5, **caractérisé en ce que** le dispositif de réseau (GE) utilise l'au moins un paramètre dans une instruction destinée aux au moins deux dispositifs d'accès radio (NODE B, AP) pour l'envoi d'informations (I1, I2) à l'au moins une station radio (UE) .

7. Procédé selon la revendication 6, **caractérisé en ce que** le dispositif de réseau (GE) détermine, à partir du au moins un paramètre, un décalage dans le temps (DELAY, t1) entre l'envoi d'informations (I1) à l'au moins une station radio (UE) par un premier des au moins deux dispositifs d'accès radio (NODE B, AP) et l'envoi d'informations (I2) à l'au moins une station radio (UE) par un second des au moins deux dispositifs d'accès radio (NODE B, AP).

8. Procédé selon l'une des revendications 1 à 7, **caractérisé en ce que** l'au moins une station radio (UE) utilise l'au moins un paramètre lors de l'analyse d'informations (I1, I2) des au moins deux dispositifs d'accès radio (NODE B, AP) .

9. Procédé selon la revendication 8, **caractérisé en ce que** l'utilisation du au moins un paramètre par l'au moins une station radio (UE) est ordonnée par le dispositif de réseau (GE).

10. Procédé selon la revendication 8 ou 9, **caractérisé en ce que** l'au moins une station radio (UE) détermine, à partir du au moins un paramètre, un temps d'attente (t2) de la réception d'informations (I2) d'un second des au moins deux dispositifs d'accès radio (NODE B, AP) après la réception d'informations (I1) d'un premier des au moins deux dispositifs d'accès radio (NODE B, AP).

11. Procédé d'exploitation
i. d'un système de radiocommunication avec au moins deux unités d'une ressource radio, comprenant à chaque fois un réseau radio partiel et un dispositif d'accès radio pour les au moins deux unités de la ressource radio, ou
ii. d'au moins deux systèmes de radiocommunication (UMTS, WLAN), comprenant à chaque fois un réseau radio avec à chaque fois un dispositif d'accès radio (NODE B, AP),
les zones de couverture radio des au moins deux dispositifs d'accès radio (NODE B, AP) se chevauchant localement dans au moins une zone de chevauchement,
les réseaux radio partiels ou les réseaux radio étant reliés à un dispositif de réseau (GE),
au moins une station radio (UE) se trouvant dans l'au moins une zone de chevauchement et
au moins un signal de l'au moins une station radio (UE) étant reçu à chaque fois dans les au moins deux dispositifs d'accès radio (NODE B, AP),
**caractérisé en ce que**
le dispositif de réseau (GE) détermine, sur la base d'instants de réception des au moins deux signaux
i. dans les au moins deux dispositifs d'accès radio du système de radiocommunication ou
ii. dans les au moins deux systèmes de radiocommunication (UMTS, WLAN),
au moins un paramètre pour une synchronisation de la communication
i. dans les au moins deux unités de la ressource radio du système de radiocommunication ou
ii. dans les au moins deux systèmes de radiocommunication (UMTS, WLAN),
dans lequel pour la communication à synchroniser il s'agit de l'envoi d'informations dissociées (I1, I2) au cours duquel une première partie des informations (I1, I2) est envoyée par le biais d'un des au moins deux dispositifs d'accès radio (NODE B, AP) et une
deuxième partie des informations (I1, 12), différente de la première partie, est envoyée par le biais d'un autre des au moins deux dispositifs d'accès radio (NODE B, AP), à l'au moins une station radio (UE).

12. Procédé selon la revendication 11, **caractérisé en ce que** l'au moins un paramètre (DELAY) est formé par une différence d'instants de réception.

13. Procédé selon l'une des revendications 11 ou 12, **caractérisé en ce que** les au moins deux signaux sont une séquence d'apprentissage (TS) connue du système de radiocommunication ou des au moins deux systèmes de radiocommunication (UMTS, WLAN).

14. Procédé selon l'une des revendications 11 à 13, **caractérisé en ce que** le dispositif de réseau (GE) utilise l'au moins paramètre dans une instruction destinée à l'au moins une station radio (UE) pour l'envoi d'informations aux au moins deux dispositifs d'accès radio (NODE B, AP) .

15. Procédé selon la revendication 14, **caractérisé en ce que** le dispositif de réseau (GE) détermine, à partir du au moins un paramètre, un décalage dans le temps entre l'envoi d'informations à un premier des au moins deux dispositifs d'accès radio (NODE B, AP) par l'au moins une station radio (UE) et l'envoi d'informations à un second des au moins deux dispositifs d'accès radio (NODE B, AP) par l'au moins une station radio (UE).

16. Procédé selon l'une des revendications 11 à 15, **caractérisé en ce que** le dispositif de réseau (GE) utilise l'au moins un paramètre lors de l'analyse d'informations de l'au moins une station radio (UE).

17. Dispositif de réseau (GE) pour l'exploitation
i. d'un système de radiocommunication avec au moins deux unités d'une ressource radio, comprenant à chaque fois un réseau radio partiel pour les au moins deux unités de la ressource radio ou
ii. d'au moins deux systèmes de radiocommunication (UMTS, WLAN) avec à chaque fois un réseau radio,
le dispositif de réseau (GE) étant relié aux au moins deux réseaux radio partiels ou réseaux radio, comprenant à chaque fois un dispositif d'accès radio (NODE B, AP),
les zones de couverture radio des au moins deux dispositifs d'accès radio (NODE B, AP) se chevauchant localement dans au moins une zone de chevauchement,
au moins une station radio (UE) se trouvant dans l'au moins une zone de chevauchement,
**caractérisé par**
un moyen pour affecter aux au moins deux dispositifs d'accès radio (NODE B, AP) des informations (I1, I2) devant être envoyées à l'au moins une station radio (UE), dans lequel pour les informations (I1, I2) il s'agit des informations dissociées (I1, I2) dont une première partie doit être envoyée par le biais d'un des au moins deux dispositifs d'accès radio (NODE B, AP) et dont une deuxième partie, différente de la première partie, doit être envoyée par le biais d'un autre des au moins deux dispositifs d'accès radio (NODE B, AP), à l'au moins une station radio (UE) et
un moyen pour affecter des instants d'émission des informations (I1, I2) devant être envoyées à l'au moins une station radio (UE),
un moyen pour déterminer au moins un paramètre pour une synchronisation de la communication, dans lequel pour la communication à synchroniser il s'agit de l'envoi des informations dissociées (I1, I2)
i. dans les au moins deux unités de la ressource radio du système de radiocommunication ou
ii. dans les au moins deux systèmes de radiocommunication (UMTS, WLAN)
sur la base d'instants de réception d'au moins un signal à chaque fois
i. dans les au moins deux systèmes d'accès radio du système de radiocommunication ou
ii. dans les au moins deux systèmes de radiocommunication.
